# EUROPÄISCHE PATENTSCHRIFT

(11) **EP 2 911 912 B1**
(45) Veröffentlichungstag und Bekanntmachung des Hinweises auf die Patenterteilung: **08.08.2018**
(21) Anmeldenummer: 13779610.8
(22) Anmeldetag: 22.10.2013
(51) Int. Cl.: B60Q 1/14

(54) **BETÄTIGUNGSBAUGRUPPE FÜR EIN BEDIENELEMENT, LENKSTOCKHEBEL SOWIE LENKSTOCKBAUGRUPPE**
ACTUATING ASSEMBLY FOR AN OPERATING ELEMENT, STEERING COLUMN SWITCH, AND STEERING COLUMN ASSEMBLY
MODULE D'ACTIONNEMENT POUR UN ÉLÉMENT DE COMMANDE, LEVIER DE DIRECTION ET MODULE COLONNE DE DIRECTION

(30) Priorität: 29.10.2012 DE 102012021261
(43) Veröffentlichungstag der Anmeldung: 02.09.2015
(73) Patentinhaber: TRW Automotive Electronics & Components GmbH, 78315 Radolfzell (DE)
(72) Erfinder: ALTMANN, Markus, 78345 Moos (DE); SCHULTE, Peter, 78315 Radolfzell (DE)
(74) Vertreter: Prinz & Partner mbB
(86) Internationale Anmeldenummer: PCT/EP2013/072059
(87) Internationale Veröffentlichungsnummer: WO 2014/067813

(56) Entgegenhaltungen:
- WO-A1-2005/031491
- DE-A1- 10 160 801
- DE-A1-102007 008 960
- DE-A1-102009 058 719
- DE-C1- 10 148 554

## Beschreibung

Die Erfindung betrifft eine Betätigungsbaugruppe nach dem Oberbegriff des Anspruchs 1. Die Erfindung betrifft des Weiteren einen Lenkstockhebel für ein Fahrzeug sowie eine Lenkstockhebelbaugruppe.

In vielen Fahrzeugen sind Lenkstockhebel vorgesehen, über die verschiedene Fahrzeugfunktionen, beispielsweise Scheibenwischer oder Blinker, gesteuert werden können. Der Lenkstockhebel ist üblicherweise verschwenkbar oder verdrehbar in einem fahrzeugfesten Lager angeordnet und weist ein Betätigungselement auf, das in Längsrichtung des Lenkstockhebels verschiebbar in einer Aufnahme gelagert ist. Am fahrzeugfesten Lager ist eine Rastkurve vorgesehen, in die das Betätigungselement durch eine Feder gedrückt wird. In der Rastkurve können verschiedene Taster oder Kontakte für das Betätigungselement vorgesehen sein. Wird der Lenkstockhebel verschwenkt, wird das Betätigungselement auf der Rastkurve verschoben, wobei ein Taster bedient oder über einen Kontakt eine elektrische Verbindung hergestellt werden kann und somit verschiedene Fahrzeugfunktionen aktiviert oder deaktiviert werden können.

Um unerwünschte Klappergeräusche zu vermeiden und um den Bedienkomfort zu steigern, ist es erforderlich, dass der Lenkstockhebel sowie das Betätigungselement möglichst spielfrei gelagert sind. Andererseits darf zwischen Betätigungselement und Aufnahme keine zu hohe Reibung entstehen, da sonst die Bedienkräfte ansteigen würden.

Aus dem Stand der Technik sind Betätigungsbaugruppen bekannt, bei welchen Teile der Aufnahme oder des Betätigungselements elastisch ausgebildet sind und das Betätigungselement in der Aufnahme elastisch geklemmt wird. Nachteilig an diesen Betätigungsbaugruppen ist zum einen die große Reibung zwischen Betätigungselement und Aufnahme. Zum anderen unterliegen diese aufgrund der Reibung einem hohen Verschleiß, sodass mit zunehmender Betriebsdauer die Reibung reduziert wird und das Spiel erhöht wird. Eine Reduzierung des Spiels ist nur durch den Austausch des gesamten Hebels möglich.

Aus der WO 2005/031491 A1 ist eine Betätigungsbaugruppe bekannt, in der zumindest ein elastisch verformbarer Ring in einer Aufnahme angeordnet ist und als Zentriervorrichtung für das Betätigungselement dient, wobei der Ring von einer Druckfeder in axialer Richtung des Betätigungselements mit einer Federkraft beaufschlagt wird. Der Ring weist einen in Kraftrichtung der Druckfeder sich verjüngenden Querschnitt auf und liegt an einer komplementären Oberfläche am Betätigungselement an.

Aufgabe der Erfindung ist es, eine Betätigungsbaugruppe für einen Lenkstockhebel bereitzustellen, die über die gesamte Lebensdauer ein geringes Spiel des Betätigungselements aufweist. Aufgabe der Erfindung ist es ferner, einen Lenkstockhebel sowie eine Lenkstockbaugruppe mit einer solchen Betätigungsbaugruppe bereitzustellen.

Zur Lösung der Aufgabe ist bei einer Betätigungsbaugruppe für einen Lenkstockhebel, mit einem Betätigungselement, das in einer Betätigungsrichtung zwischen einer Grundstellung und zumindest einer Betätigungsstellung verschiebbar ist, und einer Aufnahme, in der das Betätigungselement verschiebbar gelagert ist, zwischen der Aufnahme und dem Betätigungselement zumindest ein separates Federelement vorgesehen, das mit einer im Wesentlichen quer zur Betätigungsrichtung wirkenden Federkraft auf das Betätigungselement drückt. In der Aufnahme sind dem Federelement im Wesentlichen gegenüberliegende Führungselemente vorgesehen, gegen die das Betätigungselement von dem Federelement gedrückt wird. Das Betätigungselement sowie die Aufnahme sind starr ausgebildet. Die Reduzierung des Spiels zwischen Aufnahme und Betätigungselement erfolgt ausschließlich durch das Federelement, das in der Aufnahme angeordnet ist und das Betätigungselement gegen die Innenwand der Aufnahme drückt. Ein solches Federelement ermöglicht eine beliebige Anpassung der zwischen Aufnahme und Betätigungselement wirkenden Federkraft, sodass eine genaue Anpassung der Spielfreiheit sowie der wirkenden Reibung zwischen Aufnahme und Betätigungselement möglich ist. Ein separates Federelement hat darüber hinaus den Vorteil, dass dieses im Falle einer Reduzierung der Federkraft mit einfachen Mitteln ausgetauscht werden kann. Zudem kann durch das Federelement ein verschleißbedingtes Spiel zwischen Aufnahme und Betätigungselement ausgeglichen werden. Diese Führungselemente können beispielsweise so beschichtet sein, dass die Reibung zwischen Betätigungselement und Aufnahme reduziert ist, wodurch das Betätigungselement reibungsarm in der Aufnahme gelagert ist. Zudem liegt das Betätigungselement vorzugsweise ausschließlich an den Führungselementen an und nicht flächig an der Innenwand der Aufnahme.

Das Federelement erstreckt sich beispielsweise in Betätigungsrichtung in der Aufnahme und liegt zumindest abschnittsweise an der Innenwand der Aufnahme an. Das Federelement stützt sich an der Innenwand der Aufnahme ab, sodass keine zusätzlichen Bauteile zur Lagerung des Federelements erforderlich sind.

Das Federelement weist vorzugsweise vorstehende Abschnitte auf, die von der Wandung der Aufnahme vorstehen und am Betätigungselement anliegen. Das Federelement ist insbesondere wellenförmig ausgebildet, sodass diese mit einzelnen Abschnitten an der Innenwand der Aufnahme sowie mit vorstehenden Abschnitten am Federelement anliegt. Durch die Form und die Höhe der wellenförmigen Feder kann die Federkraft beliebig eingestellt werden.

Am Betätigungselement kann zumindest ein Vorsprung und/oder eine Vertiefung vorgesehen sein. Das Federelement liegt beispielsweise in der Grundstellung des Betätigungselements mit einem vorstehenden Abschnitt an einem Vorsprung an und/oder in einer Betätigungsstellung in einer Vertiefung. Durch das Federelement, das das Betätigungselement gegen die Innenwand der Aufnahme drückt, entsteht eine höhere Reibung zwischen Betätigungselement und Aufnahme, sodass die Betätigungskraft zum Verschieben des Betätigungselements ansteigt. Gelangen die vorstehenden Abschnitte des Federelements in eine Vertiefung bzw. werden diese von einem Vorsprung weggeschoben, entspannt sich die Feder und verringert so die Reibung zwischen Betätigungselement und Aufnahme. Dadurch liegt in der Betätigungsstellung eine geringere Betätigungskraft vor, wobei unabhängig von der Position des Betätigungselements eine ausreichend hohe Federkraft auf das Betätigungselement ausgeübt wird, dass dieses spielfrei in der Aufnahme gehalten ist.

Vorzugsweise ist in einer solchen Ausführungsform zwischen einem Vorsprung und einer in Betätigungsrichtung hinter dem Vorsprung liegenden Vertiefung eine Rampe für den vorstehenden Abschnitt des Federelements vorgesehen, durch den der vorstehende Abschnitt zwischen Vorsprung und Vertiefung geführt werden kann. Gelangt der vorstehende Abschnitt des Federelements auf diese schräge Rampe, wird durch das Federelement eine geringe Lösekraft in Betätigungsrichtung auf das Betätigungselement ausgeübt, durch die eine durch den Reibungswiderstand entstehenden Haltekraft reduziert wird, so dass das Betätigungselement mit einer geringeren Betätigungskraft bewegt werden kann.

Das Federelement kann beispielsweise ein Blechbiegeteil sein, das insbesondere wellenförmig vorgebogen ist. Bei Federelementen aus Kunststoff kann die Federspannung aufgrund des viskoelastischen Verhaltens des Kunststoffs oder anderen Alterungserscheinung mit zunehmender Betriebsdauer nachlassen. Eine Blechbiegeteil bietet den Vorteil, dass die Vorspannung des Federelements über die Betriebsdauer nicht oder nur geringfügig nachlässt.

Die Aufnahme ist beispielsweise rechteckig bzw. quadratisch ausgebildet. Das Federelement kann an einer Ecke des Quadrats angeordnet sein und das Betätigungselement in die gegenüberliegende Ecke des Quadrats drücken. In einer solchen Ausführungsform reicht ein Federelement aus, um das Betätigungselement spielfrei zu lagern. An den Flächen der Aufnahme, die an die Ecke, in die das Betätigungselement gedrückt wird, angrenzen, können jeweils Führungselemente vorgesehen sein. Es ist aber auch denkbar, dass zwei Federelemente vorgesehen sind, die insbesondere in Umfangsrichtung um 90° versetzt angeordnet sind. Diese können beispielsweise an zwei aneinander angrenzenden Flächen der quadratischen Aufnahme angeordnet sein und das Betätigungselement jeweils gegen die gegenüberliegende Fläche drücken.

Die Federelemente können einstückig ausgebildet sein, sodass nur eine Befestigung für die Federelemente in der Aufnahme erforderlich ist. Ist das Federelement ein Blechbiegeteil, kann dieses beispielsweise zwei senkrecht zueinander angeordnete Arme aufweisen, die jeweils rechtwinklig umgebogen sind.

Erfindungsgemäß ist des Weiteren ein Lenkstockhebel mit einer erfindungsgemäßen Betätigungsbaugruppe vorgesehen. Die Aufnahme der Betätigungsbaugruppe ist vorzugsweise am Betätigungshebel vorgesehen und insbesondere einstückig mit diesem ausgebildet.

Erfindungsgemäß ist des Weiteren eine Lenkstockhebelbaugruppe vorgesehen, mit einem erfindungsgemäßen Lenkstockhebel und einem fahrzeugfesten Lager zur Aufnahme der Lagerung des Lenkstockhebels, wobei das Lager eine Rastkurve aufweist, in die das Betätigungselement eingreifen kann.

Weitere Vorteile und Merkmale ergeben sich aus der nachfolgenden Beschreibung in Verbindung mit den beigefügten Zeichnungen. In diesen zeigen:
- Figur 1 einen erfindungsgemäßen Lenkstockhebel,
- Figur 2 eine Detailansicht der Betätigungsbaugruppe des Lenkstockhebels aus Figur 1,
- Figur 3 eine Schnittansicht durch die Betätigungsbaugruppe aus Figur 2,
- Figur 4 eine perspektivische Ansicht der Aufnahme der Betätigungsbaugruppe aus Figur 2,
- Figur 5 das Betätigungselement der Betätigungsbaugruppe aus Figur 2, und
- Figur 6 das Betätigungselement aus Figur 5 mit einem Federelement.

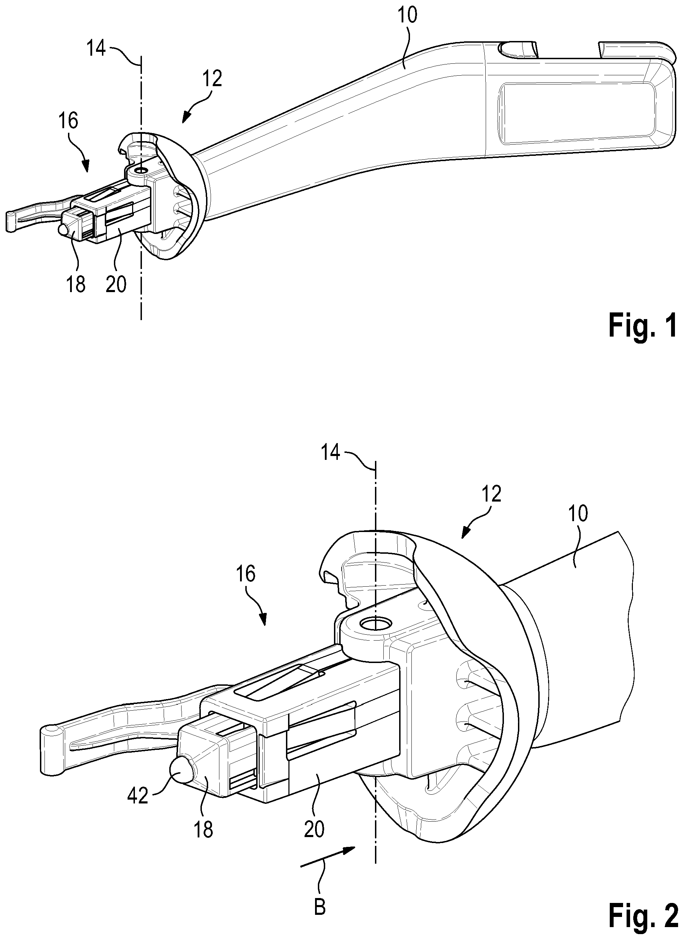

In Figur 1 ist ein Lenkstockhebel 10 für ein Fahrzeug gezeigt. Der Lenkstockhebel 10 weist eine Lagerung 12 auf, mit der der Lenkstockhebel 10 an einem fahrzeugfesten Lager um eine Schwenkachse 14 verschwenkbar gelagert werden kann.

Der Lenkstockhebel 10 weist des Weiteren eine Betätigungsbaugruppe 16 mit einem Betätigungselement 18 auf. Das Betätigungselement 18 greift in eine Rastkurve am fahrzeugfesten Lager ein, in der Taster bzw. Kontakte vorgesehen sind. Wird der Lenkstockhebel 10 verschwenkt, bedient das Betätigungselement 18 diese Taster bzw. gelangt mit den Kontakten in Anlage, wodurch verschiedene Fahrzeugfunktionen, beispielsweise ein Scheibenwischer, gesteuert werden können.

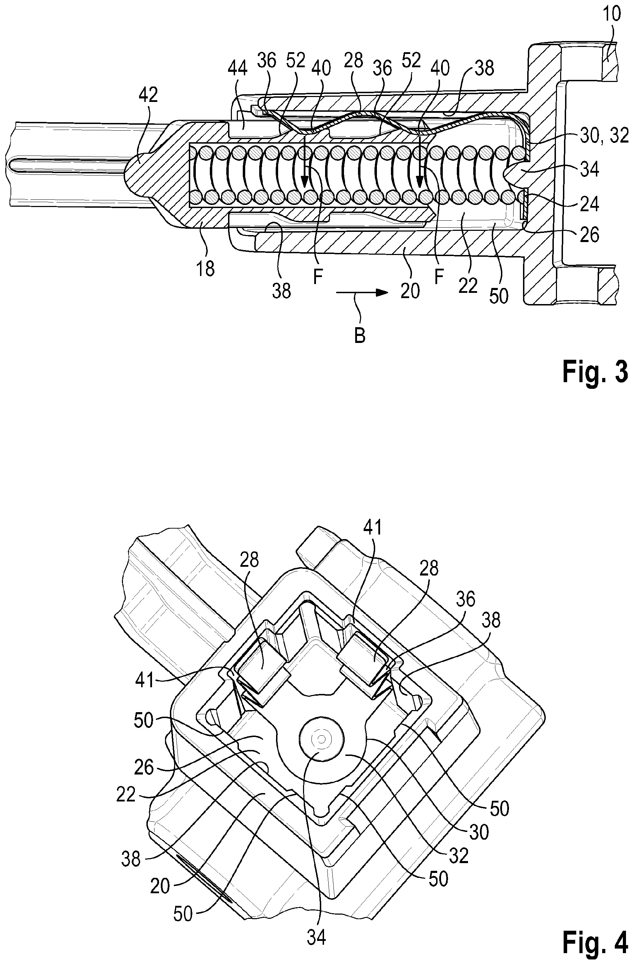

Die Betätigungsbaugruppe 16 weist eine Aufnahme 20 auf, die hier einstückig mit dem Lenkstockhebel 10 ausgebildet ist (siehe auch Figur 2). Wie insbesondere in den Figuren 3 und 4 zu sehen ist, ist die Aufnahme 20 im Querschnitt rechteckig bzw. quadratisch ausgebildet und weist einen sich in eine Betätigungsrichtung B erstreckenden Aufnahmeraum 22 auf, in dem das Betätigungselement 18 in Betätigungsrichtung B verschiebbar gelagert ist.

Im Aufnahmeraum 22 ist eine Feder 24 vorgesehen, die sich an einer Stirnseite 26 der Aufnahme 20 abstützt und das Betätigungselement 18 entgegen der Betätigungsrichtung B in eine in Figur 3 gezeigte Grundstellung drängt. Wird der Lenkstockhebel 10 verschwenkt, kann das Betätigungselement 18 durch die Rastkurve in Betätigungsrichtung B aus dieser Grundstellung in eine Betätigungsstellung verschoben werden.

Wie insbesondere in den Figuren 3 und 4 zu sehen ist, sind in der Aufnahme zwischen Aufnahme 20 und Betätigungselement 18 zwei Federelemente 28 vorgesehen, die jeweils mit einer Federkraft F das Betätigungselement 18 gegen die gegenüberliegende Innenwand 38 der Aufnahme 20 drücken.

Wie insbesondere in Figur 4 zu sehen ist, sind die Federelemente 28 einstückig aus einem Blechbiegeteil 30 hergestellt. Das Blechbiegeteil 30 weist einen Grundabschnitt 32 auf, der an einem Vorsprung 34 an der Stirnseite 26 der Aufnahme 20 befestigt ist. Die Federelemente 28 ragen jeweils rechtwinklig zueinander vom Grundabschnitt 32 ab und sind unmittelbar nach dem Grundabschnitt 32 rechtwinklig umgebogen.

Die Federelemente 28 sind in der hier gezeigten Ausführungsform wellenförmig ausgebildet und liegen mit Abschnitten 36 an der Innenwand 38 der Aufnahme 20 an. Zwischen den Abschnitten 36 sind vorstehende Abschnitte 40 vorgesehen, die von der Innenwand 38 in Richtung zu Betätigungselement 18 abstehen und am Betätigungselement 18 anliegen. Die Federelemente 28 sind jeweils in einer Nut 41 gehalten.

Das Betätigungselement 18 weist ebenfalls einen im Wesentlichen quadratischen Querschnitt auf. An einem in Betätigungsrichtung B hinteren Ende ist ein Vorsprung 42 vorgesehen, der in eine am fahrzeugfesten Lager vorgesehene Rastkurve eingreifen kann.

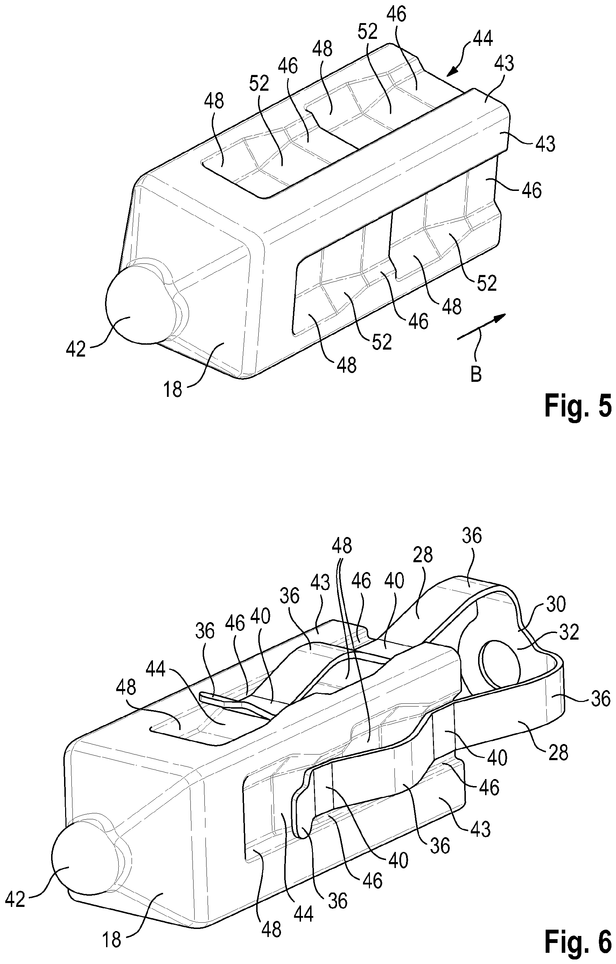

An den Seitenflächen 43 des Betätigungselements 18 sind in Betätigungsrichtung B verlaufende Nuten 44 vorgesehen, an welchen die Federelemente 28 anliegen (Figuren 3 und 6). In den Nuten 44 sind mehrere in Betätigungsrichtung B hintereinanderliegende Vorsprünge 46 sowie zwischen diesen angeordnete Vertiefungen 48 vorgesehen.

Wie in Figur 3 zu sehen ist, liegen die vorstehenden Abschnitte 40 der Federelemente 28 in der Grundstellung jeweils an einem Vorsprung 46 des Betätigungselements 18 an.

Das Betätigungselement 18 wird somit von den Federelementen 28 mit einer Federkraft F jeweils an die gegenüberliegende Innenwand 38 der Aufnahme 20 gedrückt, sodass das Betätigungselement 18 spielfrei gelagert ist. Die Aufnahme 20 sowie das Betätigungselement 18 sind jeweils starr ausgebildet. Die Federkraft F, die das Betätigungselement 18 gegen die Innenwand 38 der Aufnahme 20 drückt, wird also ausschließlich von den Federelementen 28 bereitgestellt.

Wie insbesondere in Figur 4 zu sehen ist, sind an der Innenwand 38 Führungselemente 50 vorgesehen, gegen die das Betätigungselement 18 gedrückt wird. Diese Führungselemente 50 können so ausgebildet sein, dass die Reibung zwischen Betätigungselement 18 und Führungselementen 50 reduziert ist, sodass das Betätigungselement 18 mit einem geringeren Widerstand in Betätigungsrichtung B bewegt werden kann.

Zwischen den Vorsprüngen 46 und den in Betätigungsrichtung B hinter diesen liegenden Vertiefungen 48 sind jeweils Rampen 52 vorgesehen. Wird das Betätigungselement 18 in Betätigungsrichtung B verschoben, gelangen die vorstehenden Abschnitte 40 der Federelemente 28 an diese Rampen 52 und beim weiteren Verschieben in die Vertiefungen 48.

Sind die vorstehenden Abschnitte 40 in den Vertiefungen angeordnet, ist die Federkraft F, die das Betätigungselement 18 gegen die Führungselemente 50 drückt, reduziert, sodass das Betätigungselement 18 mit einer geringeren Kraft in Betätigungsrichtung B verschoben werden kann. Auch in diesen Positionen wird das Betätigungselement 18 aber gegen die Führungselemente 50 gedrückt, sodass das Betätigungselement 18 spielfrei gelagert ist.

Die Rampen 52 haben beim Verschieben des Betätigungselements 18 von der Grundstellung in eine Betätigungsstellung den Vorteil, dass, sobald die vorstehenden Abschnitte 40 an den Rampen 52 anliegen, durch das Federelement 28 eine geringe Betätigungskraft in Betätigungsrichtung B auf das Betätigungselement 18 ausgeübt wird. Diese Kraft ist wesentlich geringer als die von der Feder 24 bereitgestellte Rückstellkraft. Da diese Kraft aber in Betätigungsrichtung B wirkt, reduziert diese die Kraft, die zum Verschieben des Betätigungselements 18 erforderlich ist. Dadurch kann die erhöhte Reibung zwischen Betätigungselement 18 und Aufnahme 20, die durch die Federkraft F, die das Betätigungselement 18 quer zur Betätigungsrichtung B gegen die Innenwand der Aufnahme 20 drückt, teilweise ausgeglichen werden.

In der hier gezeigten Ausführungsform weist die Betätigungsbaugruppe 16 zwei Federelemente 28 auf, die im Wesentlichen um 90° versetzt angeordnet sind, sodass diese in zwei senkrecht zueinander stehenden Richtungen auf das Betätigungselement 18 wirken.

Die Anzahl der Federelemente 28 kann aber beliebig angepasst werden. Insbesondere ist es denkbar, dass nur ein Federelement 28 verwendet wird. Dieses kann beispielsweise bei einem quadratischen Querschnitt in einer Ecke angeordnet sein und das Betätigungselement 18 in die gegenüberliegende Ecke drängen.

Die Form und das Material des Federelements 28 können beliebig angepasst werden. Es ist lediglich sicherzustellen, dass durch das Federelement 28 eine quer zur Betätigungsrichtung B wirkende Federkraft F auf das Betätigungselement 18 ausgeübt wird. Durch einen Austausch oder eine Anpassung des Federelements 28 ist eine schnelle Beseitigung des Spiels zwischen Betätigungselement 18 und Aufnahme 20 möglich.

## Patentansprüche

1. Betätigungsbaugruppe (16) für ein Bedienelement in einem Fahrzeug, insbesondere für einen Lenkstockhebel (10), mit einem Betätigungselement (18), das in einer Betätigungsrichtung (B) zwischen einer Grundstellung und zumindest einer Betätigungsstellung verschiebbar ist, und einer Aufnahme (20), in der das Betätigungselement (18) verschiebbar gelagert ist, wobei zwischen der Aufnahme (20) und dem Betätigungselement (18) zumindest ein separates Federelement (28) vorgesehen ist, das mit einer im Wesentlichen quer zur Betätigungsrichtung (B) wirkenden Federkraft (F) auf das Betätigungselement (18) drückt, **dadurch gekennzeichnet, dass** in der Aufnahme (20) dem Federelement (28) im Wesentlichen gegenüberliegende Führungselemente (50) vorgesehen sind, gegen die das Federelement (28) das Betätigungselement (18) drückt.

2. Betätigungsbaugruppe nach Anspruch 1, **dadurch gekennzeichnet, dass** sich das Federelement (28) in Betätigungsrichtung (B) in der Aufnahme (20) erstreckt und zumindest abschnittsweise an einer Innenwand der Aufnahme (20) anliegt.

3. Betätigungsbaugruppe nach Anspruch 2, **dadurch gekennzeichnet, dass** das Federelement (28) vorstehende Abschnitte (40) aufweist, die von der Innenwand der Aufnahme (20) abstehen, wobei das Federelement insbesondere wellenförmig ausgebildet ist.

4. Betätigungsbaugruppe nach Anspruch 3, **dadurch gekennzeichnet, dass** am Betätigungselement (18) zumindest ein Vorsprung (46) und/oder eine Vertiefung (48) vorgesehen ist, wobei das Federelement (28) in der Grundstellung des Betätigungselements (18) mit einem vorstehenden Abschnitt (40) an einem Vorsprung (46) anliegt und/oder in einer Betätigungsstellung in einer Vertiefung (48) anliegt.

5. Betätigungsbaugruppe nach Anspruch 4, **dadurch gekennzeichnet, dass** zwischen einem Vorsprung (46) und einer in Betätigungsrichtung (B) hinter dem Vorsprung liegenden Vertiefung (48) eine Rampe (52) für den vorstehenden Abschnitt (40) des Federelements vorgesehen ist.

6. Betätigungsbaugruppe nach einem der vorhergehenden Ansprüche, **dadurch gekennzeichnet, dass** das Federelement (28) ein Blechbiegeteil (30) ist, das insbesondere wellenförmig vorgebogen ist.

7. Betätigungsbaugruppe nach einem der vorhergehenden Ansprüche, **dadurch gekennzeichnet, dass** zwei Federelemente (28) vorgesehen sind, die insbesondere in Umfangsrichtung um 90° versetzt angeordnet und vorzugsweise einstückig miteinander ausgebildet sind.

8. Lenkstockhebel (10) mit einer Lagerung (12) zur Lagerung des Lenkstockhebels (10) oder einer Lenksäule, und mit einer Betätigungsbaugruppe (16) nach einem der vorhergehenden Ansprüche, wobei die Aufnahme (20) der Betätigungsbaugruppe (16) insbesondere einstückig mit dem Lenkstockhebel (10) ausgebildet ist.

9. Lenkstockhebelbaugruppe, mit einem Lenkstockhebel (10) nach Anspruch 8 und einem fahrzeugfesten Lager zur Aufnahme der Lagerung (12) des Lenkstockhebels (10), wobei das Lager eine Rastkurve aufweist, in die das Betätigungselement (18) eingreifen kann.

## Claims

1. An actuating assembly (16) for a control element in a vehicle, in particular for a steering column stalk (10), comprising an actuating element (18) that is adapted to be shifted in an actuating direction (B) between a basic position and at least one actuation position, and a seat (20) in which the actuating element (18) is shiftably supported, at least one separate spring element (28) being provided between the seat (20) and the actuating element (18) and pressing on the actuating element (18) by a spring force (F) which acts substantially transversely to the actuating direction (B), **characterized in that** guide members (50) that are located substantially opposite to the spring element (28) are provided in the seat (20), the spring element (28) pressing the actuating element (18) against the guide members (50).

2. The actuating assembly according to claim 1, **characterized in that** the spring element (28) extends within the seat (20) in the actuating direction (B) and rests against an inner wall of the seat (20) at least in sections.

3. The actuating assembly according to claim 2, **characterized in that** the spring element (28) includes protruding sections (40) which project from the inner wall of the seat (20), the spring element having in particular an undulating configuration.

4. The actuating assembly according to claim 3, **characterized in that** at least one projection (46) and/or one depression (48) is provided on the actuating element (18), the spring element (28) resting by a protruding section (40) against a projection (46) in the basic position of the actuating element (18), and/or resting in a depression (48) in an actuation position.

5. The actuating assembly according to claim 4, **characterized in that** a ramp (52) for the protruding section (40) of the spring element is provided between a projection (46) and a depression (48) located behind the projection in the actuating direction (B).

6. The actuating assembly according to any of the preceding claims, **characterized in that** the spring element (28) is a bent sheet metal part (30) which is pre-bent in particular in an undulating shape.

7. The actuating assembly according to any of the preceding claims, **characterized in that** two spring elements (28) are provided which in particular are arranged offset by 90 degrees in the circumferential direction and are preferably formed integrally with each other.

8. A steering column stalk (10) comprising a mounting (12) for supporting the steering column stalk (10) or a steering column, and comprising an actuating assembly (16) according to any of the preceding claims, wherein the seat (20) of the actuating assembly (16) is in particular formed integrally with the steering column stalk (10).

9. A steering column stalk assembly comprising a steering column stalk (10) according to claim 8 and a vehicle-fixed bearing for accommodation of the mounting (12) of the steering column stalk (10), wherein the bearing includes a detent cam surface into which the actuating element (18) can engage.

## Revendications

1. Ensemble d'actionnement (16) pour un élément de commande dans un véhicule, en particulier pour un levier de direction (10), comportant un élément d'actionnement (18) qui est déplaçable dans un sens d'actionnement (B) entre une position initiale et au moins une position d'actionnement, et un siège (20) dans lequel l'élément d'actionnement (18) est monté de manière déplaçable, au moins un élément ressort (28) séparé qui pousse sur l'élément d'actionnement (18) avec une force ressort (F) agissant sensiblement transversalement au sens d'actionnement (B) étant prévue entre le siège (20) et l'élément d'actionnement (18), **caractérisé en ce que** des éléments de guidage (50) qui sont sensiblement opposés à l'élément ressort (28) et contre lesquels l'élément ressort (28) pousse l'élément d'actionnement (18) sont prévus dans le siège (20).

2. Ensemble d'actionnement selon la revendication 1, **caractérisé en ce que** l'élément ressort (28) s'étend dans le sens d'actionnement (B) dans le siège (20) et repose au moins par tronçons sur une paroi intérieure du siège (20).

3. Ensemble d'actionnement selon la revendication 2, **caractérisé en ce que** l'élément ressort (28) présente des tronçons en saillie (40) qui dépassent de la paroi intérieure du siège (20), l'élément ressort étant en particulier réalisé de manière ondulée.

4. Ensemble d'actionnement selon la revendication 3, **caractérisé en ce qu'**au moins un ressaut (46) et/ou un évidement (48) est prévu sur l'élément d'actionnement (18), l'élément ressort (28) reposant dans la position initiale de l'élément d'actionnement (18) contre un ressaut (46) par l'intermédiaire d'un tronçon en saillie (40), et reposant dans un évidement (48) dans une position d'actionnement.

5. Ensemble d'actionnement selon la revendication 4, **caractérisé en ce qu'**une rampe (52) pour le tronçon en saillie (40) de l'élément ressort est prévue entre un ressaut (46) et un évidement (48) agencé derrière le ressaut dans le sens d'actionnement (B).

6. Ensemble d'actionnement selon l'une des revendications précédentes, **caractérisé en ce que** l'élément ressort (28) est une pièce de tôle pliée (30) qui est en particulier pré-pliée de manière ondulée.

7. Ensemble d'actionnement selon l'une des revendications précédentes, **caractérisé en ce qu'**il est prévu deux éléments ressort (28) qui sont en particulier agencés avec un décalage de 90° dans le sens périphérique et qui sont de préférence réalisés d'un seul tenant l'un avec l'autre.

8. Levier de direction (10) comportant un support (12) pour supporter le levier de direction (10) ou une colonne de direction, et comportant un ensemble d'actionnement (16) selon l'une des revendications précédentes, le siège (20) de l'ensemble d'actionnement (16) étant en particulier réalisé d'un seul tenant avec le levier de direction (10).

9. Ensemble de levier de direction, comportant un levier de direction (10) selon la revendication 8 et un palier solidaire au véhicule pour le logement du support (12) du levier de direction (10), le palier présentant une came d'enclenchement dans laquelle l'élément d'actionnement (18) peut s'engager.
